# FASCICULE DE BREVET EUROPEEN

(11) **EP 3 539 819 B1**
(45) Date de publication et mention de la délivrance du brevet: **04.05.2022**
(21) Numéro de dépôt: 19160998.1
(22) Date de dépôt: 06.03.2019
(51) Int. Cl.: B60N 2/75, B60R 11/02, B64D 11/00, B60R 11/00

(54) **ACCOUDOIR POUR SIÈGE DE VÉHICULE ET SIÈGE DE VÉHICULE COMPORTANT UN TEL ACCOUDOIR**
ARMLEHNE FÜR FAHRZEUGSITZ UND FAHRZEUGSITZ, DER EINE SOLCHE ARMLEHNE UMFASST
ARMREST FOR VEHICLE SEAT AND VEHICLE SEAT COMPRISING SUCH AN ARMREST

(30) Priorité: 12.03.2018 FR 1852130
(43) Date de publication de la demande: 18.09.2019
(73) Titulaire: FAURECIA Sièges d'Automobile, 92000 Nanterre (FR)
(72) Inventeur: GAYON, David, 91580 Etréchy (FR)
(74) Mandataire: Plasseraud IP

(56) Documents cités:
- EP-A2- 1 431 107
- WO-A1-03/051665
- DE-A1- 3 719 105
- FR-A1- 2 842 483
- US-A1- 2005 231 008
- US-B1- 6 746 065

## Description

### DOMAINE TECHNIQUE

La présente description concerne un accoudoir pour siège de véhicule, en particulier un véhicule automobile, et un siège de véhicule muni d'un tel accoudoir.

Plus particulièrement, la description concerne un accoudoir pour un siège de véhicule, comprenant :
- un bras d'accoudoir comportant une surface d'appui supérieure formant un support pour l'avant-bras d'un occupant du siège de véhicule, et
- une interface utilisateur ayant au moins une partie d'affichage, comportant une face avant comprenant un écran et une face arrière,
l'interface utilisateur étant montée mobile sur le bras d'accoudoir entre une position escamotée dans laquelle l'écran est inaccessible et une position déployée dans laquelle l'écran est accessible.

### ETAT DE LA TECHNIQUE

Le document US2005231008A1 décrit un accoudoir de ce type, qui présente l'inconvénient que dans la position déployée, l'accoudoir est quasiment inutilisable pour servir d'appui à l'avant-bras de l'utilisateur.

Par ailleurs, le document FR2842483A1, selon son abrégé, concerne un support d'écran multimédia associé à un siège ou à une banquette de véhicule automobile, apte à se présenter dans une configuration déployée, permettant son utilisation effective comme écran, ou dans une configuration escamotée dans le corps d'un accoudoir adjacent au siège ou à la banquette, caractérisé en ce que l'accoudoir est monté mobile en rotation par rapport au siège ou à la banquette autour d'un axe sensiblement transversal à la direction longitudinale du véhicule, entre une position active déployée, permettant son utilisation effective comme accoudoir, et une position escamotée contre le dossier du siège ou de la banquette.

Le document US2005231008A1, selon son abrégé, concerne un accoudoir adapté pour être monté pivotant entre une paire de sièges arrière de véhicule, qui comprend une base allongée ayant une première extrémité adaptée pour être montée pivotante sur une structure de support d'accoudoir appropriée située entre les sièges, pour un mouvement entre une position déployée entre les sièges ou dans une position rangée définissant un autre dossier entre les sièges. Un couvercle recouvrant au moins une partie de la surface supérieure de la base est monté pivotant sur la base à proximité de sa seconde extrémité, pour un mouvement entre une position fermée et une position ouverte révélant à la fois la surface supérieure de la base et un écran d'affichage vidéo sur la face inférieure. du couvercle. L'écran d'affichage vidéo, qui est de préférence lui-même supporté de manière pivotante par le couvercle, est de préférence commandé par une source vidéo logée à l'intérieur de la base et accessible via la surface supérieure de la base, commandée par un passager arrière. WO 03/051665 A1 montre un accoudoir dans lequel l'écran est intégré à rotation dans une ouverture de l'accoudoir.

### OBJETS

La présente description a notamment pour but de pallier l'inconvénient susmentionné.

A cet effet, on prévoit que, dans un accoudoir du type susmentionné, la face arrière de la partie d'affichage forme une coque et dans la position escamotée de l'interface utilisateur, la coque est intégrée à la surface d'appui supérieure du bras d'accoudoir et forme une zone de support pour au moins une partie de l'avant-bras de l'occupant du siège de véhicule, et dans la position déployée de l'interface utilisateur, l'écran est au moins partiellement en saillie au-dessus de la surface d'appui supérieure du bras d'accoudoir, et l'interface utilisateur est montée pivotante autour d'un axe de rotation et comporte en outre une partie de commande solidaire de la partie d'affichage, la partie de commande ayant une face avant et une face arrière, la face avant comportant une interface d'entrée et étant disposée pour être inaccessible dans la position escamotée de l'interface utilisateur, le bras d'accoudoir comportant une ouverture traversante qui accueille la partie d'écran en position escamotée et la partie de commande en position déployée.

Dans divers modes de réalisation de l'accoudoir, on peut éventuellement avoir recours en outre à l'une et/ou à l'autre des dispositions suivantes :
- l'interface utilisateur forme au moins partiellement une extrémité libre de l'accoudoir ;
- l'interface utilisateur est mobile en rotation par rapport au bras d'accoudoir ;
- l'interface utilisateur est montée sur un support qui est lui-même monté mobile en translation par rapport au bras d'accoudoir, selon une direction longitudinale du bras d'accoudoir ;
- ledit support est disposé à une extrémité libre de l'accoudoir ;
- ledit support comporte deux bras de support s'étendant selon la direction longitudinale du bras de support et disposés de part et d'autre de l'interface utilisateur ;
- la surface d'appui supérieure du bras d'accoudoir comporte un revêtement et la coque comporte le même revêtement ;
- l'axe de rotation est disposé à la jonction entre la partie d'écran et la partie de commande ;
- la face avant de la partie d'écran fait avec la face avant de la partie de commande un angle compris entre 95 et 140 degrés ;
- la face arrière de la partie de commande forme au moins partiellement une extrémité libre de l'accoudoir en position escamotée de l'interface utilisateur ;
- l'interface utilisateur est positionnable dans une position intermédiaire indexée où l'écran est visible d'un occupant du siège de véhicule mais où la partie de commande est disposée en biais dans l'ouverture traversante du bras d'accoudoir, de sorte que l'interface d'entrée est en pratique inutilisable ;
- l'interface utilisateur est positionnable dans une position entrouverte indexée où l'écran n'est pas visible d'un occupant du siège de véhicule et où la partie de commande est disposée en biais dans l'ouverture traversante du bras d'accoudoir ;
- l'interface d'entrée est une surface tactile ;
- la face arrière de la partie d'écran est alignée avec la face d'appui supérieure du bras d'accoudoir lorsque l'interface utilisateur est en position escamotée ;
- la coque est solidaire de l'écran ;
- le bras d'accoudoir comporte une ouverture qui accueille la partie d'affichage en position escamotée.

La présente description se rapporte par ailleurs à un siège de véhicule comprenant une assise, un dossier et au moins un accoudoir tel que défini ci-dessus. Eventuellement, le bras d'accoudoir est écarté du dossier d'une distance d'au moins 10 cm selon une direction longitudinale du bras d'accoudoir. Eventuellement, l'accoudoir est réglable en hauteur par rapport à l'assise.

### BREVE DESCRIPTION DES DESSINS

D'autres caractéristiques et avantages apparaîtront au cours de la description suivante de deux formes de réalisation, données à titre d'exemples non limitatifs, en regard des dessins joints.

Sur les dessins :
- la figure 1A est une vue de côté en perspective d'un exemple de siège de véhicule, muni d'un accoudoir avec une interface utilisateur en position escamotée, l'accoudoir étant en position basse,
- la figure 1B est une vue similaire à la figure 1A, avec l'accoudoir en position relevée,
- la figure 1C est une vue similaire à la figure 1A, avec l'interface utilisateur en train de pivoter vers la position déployée,
- la figure 1D est une vue agrandie de l'accoudoir, avec l'interface utilisateur dans une position d'utilisation intermédiaire,
- la figure 1E est une vue similaire à la figure 1A, avec l'interface utilisateur en position déployée, et
- la figure 2 est une vue agrandie de l'accoudoir, avec l'interface utilisateur en position déployée et coulissée vers l'avant.

### DESCRIPTION PLUS DETAILLEE

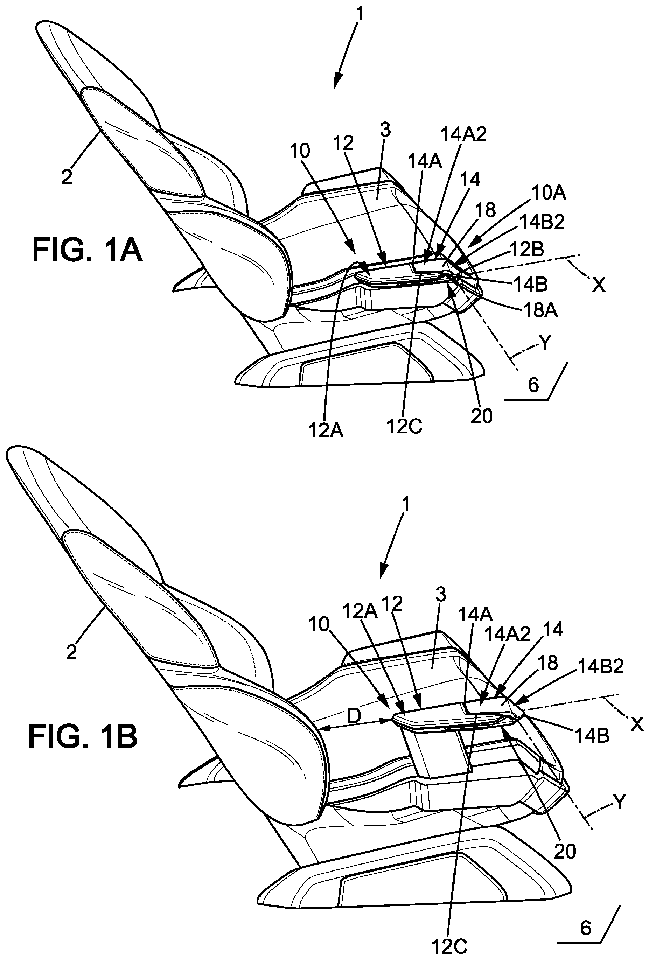

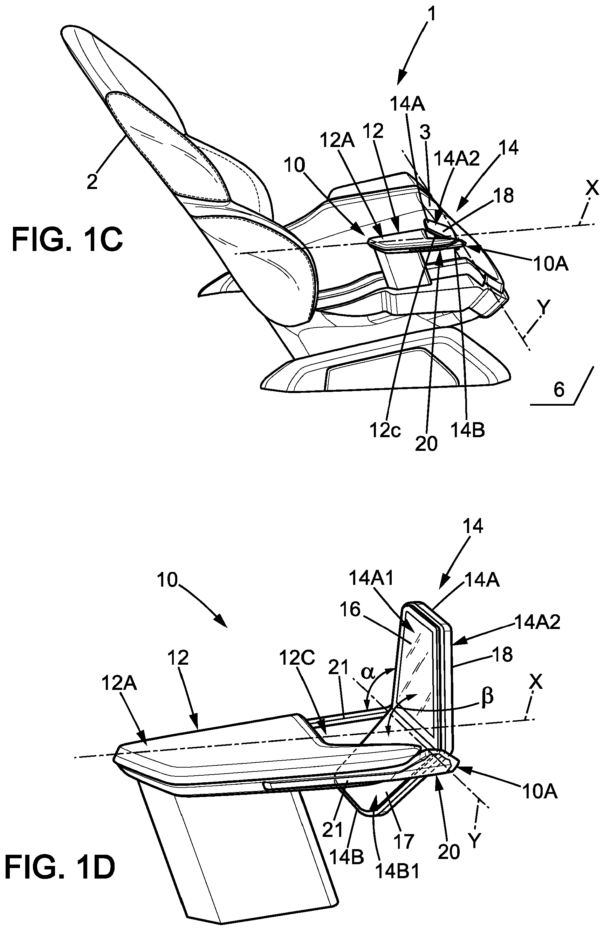

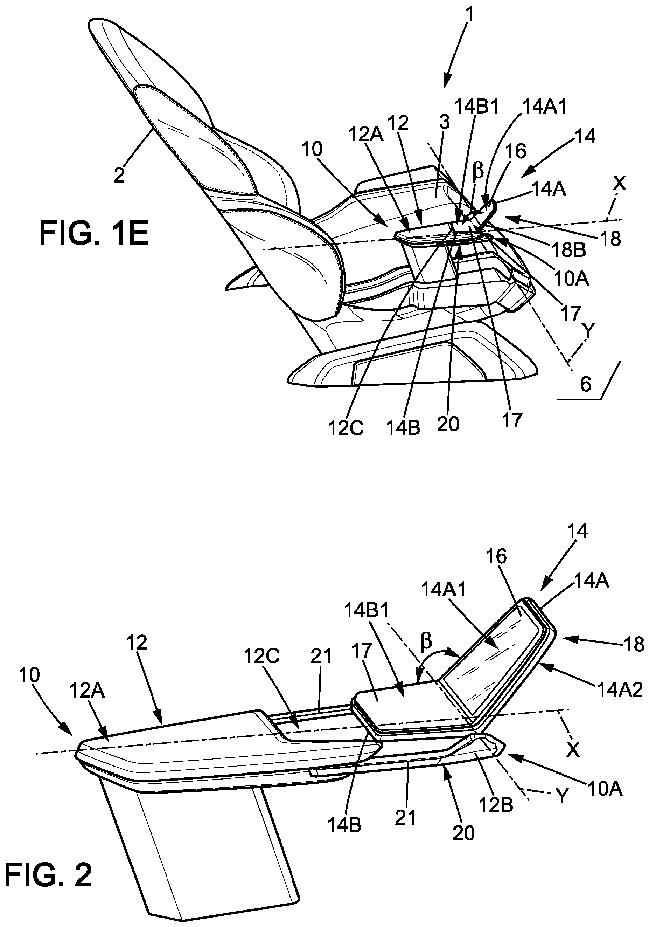

La figure 1 illustre un siège 1 de véhicule, en particulier un siège de véhicule automobile. Le siège 1 comporte un dossier 2 et une assise 3. L'assise 3 est montée sur le plancher 6 du véhicule automobile, par exemple par l'intermédiaire de glissières (non représentées)

Par ailleurs, le siège 1 est muni d'un accoudoir 10.

Un tel accoudoir 10 comprend essentiellement un bras d'accoudoir 12 formant un support pour l'avant-bras d'un occupant (non représenté) du siège de véhicule. Plus particulièrement, le bras d'accoudoir 12 comporte une surface d'appui supérieure 12A formant un support pour l'avant-bras d'un occupant du siège de véhicule 1. L'accoudoir 10 peut éventuellement être monté sur l'assise 3 et réglable en hauteur par rapport à l'assise 3, entre une position basse illustrée sur la figure 1A et une position relevée illustrée sur la figure 1B. L'accoudoir peut aussi être fixe par rapport à l'assise 3 ; en particulier l'accoudoir peut ne pas être réglable en hauteur.

L'accoudoir peut être disposé à distance du dossier 2 vers l'avant de celui-ci, par exemple à une distance D d'au moins 10 cm vers l'avant de la partie la plus avant du dossier 2.

Comme représenté sur l'ensemble des figures, l'accoudoir 10 comporte une interface utilisateur 14 ayant au moins une partie d'affichage 14A de préférence de forme aplatie, comportant une face avant 14A1 comprenant au moins un écran 16 et une face arrière 14A2 formée par une coque 18 qui peut être rigide (réalisée par exemple en matière plastique) ou souple (réalisée par exemple en cuir, textile ou autre). L'écran 16 peut être de tout type connu, notamment de tout type couramment utilisé pour les é crans de téléphones mobiles et tablettes (« smartphones » et « smart pads »). La coque 18 est solidaire de l'écran 16 et forme avec celui-ci un boîtier fermé.

L'écran 16 peut être tactile et servir ainsi non seulement pour l'affichage, mais également comme interface d'entrée permettant de commander l'interface utilisateur et / ou des fonctions du siège et / ou des fonctions du véhicule. Dans ce cas, l'interface utilisateur 14 peut éventuellement être limitée à la partie d'affichage 14A.

L'interface utilisateur 14 comporte en outre une partie de commande 14B distincte de la partie d'affichage 14A, la partie de commande 14B étant de préférence de forme aplatie et ayant une face avant 14B1 qui comporte une interface d'entrée 17 et une face arrière 14B2 opposée à la face avant. La face avant 14B1 de la partie de commande 14B est du même côté de l'interface utilisateur 14 que la face avant 14A1 de la partie d'affichage 14A, et la face arrière 14B2 de la partie de commande 14B est du même côté de l'interface utilisateur 14 que la face arrière 14A2 de la partie d'affichage 14A. La face arrière 14B2 de la partie de commande 14B peut être formée par exemple par une coque identique ou similaire à la coque 18 de la face arrière 14A2 de la partie d'affichage 14A. La coque formant la face arrière 14B2 est solidaire de la face avant 14B1 et forme avec celle-ci un boîtier fermé.

La partie de commande 14B est solidaire de la partie d'affichage 14A, c'est-à-dire sans possibilité de mouvement relatif entre ces deux parties. Selon un exemple non couvert par la revendication 1, la partie de commande 14B et la partie d'écran 14A pourraient être reliées entre elles par une liaison pivot permettant une rotation relative entre ces deux parties, sur un angle limité.

La face avant 14B1 de la partie de commande 14B peut former un angle β inférieur à 180° avec la face avant 14A1 de la partie d'affichage 14A. L'angle β peut par exemple être compris entre 95 et 140 degrés, notamment de l'ordre de 110 degrés.

L'interface d'entrée 17 peut être de tout type connu. L'interface d'entrée 17 peut par exemple être formée par un clavier et / ou un pavé tactile (« touchpad »). L'interface d'entrée 17 peut être entièrement tactile. Par exemple, l'interface d'entrée peut être un écran tactile de tout type connu, notamment de tout type couramment utilisé pour les écrans de téléphones mobiles et tablettes (« smartphones » et « smart pads »), le cas échéant avec une moindre définition que l'écran 16 susmentionné.

L'interface utilisateur 14 est montée mobile sur le bras d'accoudoir 12 entre une position escamotée (figures 1A-1B) dans laquelle l'écran 16 est inaccessible (de même que l'interface d'entrée 17 lorsqu'une telle interface d'entrée est prévue) et une position déployée (figures 1E-2) dans laquelle l'écran 16 est accessible et visible d'un utilisateur assis sur le siège 1 (de même que l'interface d'entrée 17 lorsqu'une telle interface d'entrée est prévue).

Dans la position escamotée de l'interface utilisateur 14 (figures 1A-1B), la coque 18 est intégrée à la surface d'appui supérieure 12A du bras d'accoudoir 12 et forme une zone de support pour au moins une partie de l'avant-bras de l'occupant du siège de véhicule. Plus particulièrement, en position escamotée, la coque 18 est alignée avec la surface d'appui supérieure 12A et sert d'appui pour l'avant-bras sur une partie de la surface supérieure de l'accoudoir 12, tandis que la surface d'appui supérieure 12A sert d'appui pour l'avant-bras sur le reste de la surface supérieure de l'accoudoir 12. Avantageusement, la face arrière 14A2 de la partie d'écran est alors alignée avec la surface d'appui supérieure, c'est-à-dire généralement dans le même plan. La coque 18 peut comporter le même revêtement que la surface d'appui supérieure 12A du bras d'accoudoir 12. Dans la position escamotée de l'interface utilisateur 14, la face arrière 14B2 de la partie de commande 14B peut former une extrémité libre 10A de l'accoudoir 10 (extrémité éloignée du dossier 2). Cette face arrière 14B2 de la partie de commande 14B peut comporter le même revêtement que la coque 18 et la surface d'appui supérieure 12A du bras d'accoudoir 12.

L'interface utilisateur 14 est montée pivotante autour d'un axe de rotation transversal Y, horizontal et perpendiculaire à la direction longitudinale X de l'accoudoir.

L'axe de rotation Y peut être disposé à la jonction entre la partie d'écran 14A et la partie de commande 14B.

Le bras d'accoudoir 12 comporte une ouverture 12C ménagée dans la surface d'appui supérieure 12A. L'ouverture 12C accueille la partie d'écran 14A en position escamotée et l'interface utilisateur 14 peut pivoter dans cette ouverture 12C. L'ouverture 12C peut être une ouverture verticale traversante.

Comme bien visible sur les figures 1D et 2, l'interface utilisateur 14 peut être montée pivotante sur support 20 qui est disposé à l'extrémité libre 10A de l'accoudoir et qui est lui-même monté mobile en translation par rapport au bras d'accoudoir 12, selon la direction longitudinale X du bras d'accoudoir 12. Le support 20 peut comporter deux bras de support 21 s'étendant selon la direction longitudinale X et disposés de part et d'autre de l'interface utilisateur 14 et de part et d'autre de l'ouverture traversante 12C susmentionnée.

A partir de la position escamotée des figures 1A-1B (qui peut être une position de butée pour la rotation de l'interface utilisateur 14), on peut faire pivoter l'interface utilisateur 14 autour de l'axe de rotation Y de façon à relever la partie d'écran 14A pour la faire sortir de l'ouverture traversante 12C. On peut ainsi éventuellement faire pivoter l'interface utilisateur 14 dans une position entrouverte indexée, représentée sur la figure 1C, où l'écran 16 n'est pas visible ou pas assez visible pour être utilisable. Dans cette position entrouverte, l'écran 16 peut faire un angle aigu avec la face supérieure d'appui 12A, par exemple un angle compris entre 5 et 70 degrés. Cette position peut être utile pour améliorer le confort de l'occupant du siège, la coque 18 servant toujours d'appui pour une partie de l'avant-bras de l'occupant.

Entre la position escamotée et la position déployée, l'interface utilisateur peut éventuellement présenter une position indexée intermédiaire, visible sur la figure 1D, dans laquelle l'écran 16 est visible d'un occupant assis sur le siège de véhicule 1 mais où la partie de commande 14B est disposée en biais vers le bas dans l'ouverture traversante 12C du bras d'accoudoir 12, de sorte que l'interface d'entrée 17 est en pratique inutilisable. Cette position intermédiaire peut par exemple être telle que la face avant 14A1 de la partie d'affichage 14A fait avec l'axe longitudinal X un angle α inférieur à l'angle β susmentionné. Par exemple, l'angle α peut être compris entre 80 et 110 degrés, notamment de l'ordre de 90 degrés. On notera que dans cette position intermédiaire, l'interface d'entrée 17 pourrait éventuellement être en outre désactivée par voie électronique.

Dans la position déployée de l'interface utilisateur 14, visible sur les figures 1E et 2, l'écran 16 est au moins partiellement en saillie au-dessus de la surface d'appui supérieure 12A du bras d'accoudoir 12. Plus particulièrement, l'interface d'entrée 17 est parallèle à la face d'appui supérieure 12A du bras d'accoudoir, et l'écran 16 fait donc avec cette face d'appui supérieure 12A un angle égal à β. Comme représenté sur la figure 2, l'occupant du siège peut faire coulisser le support dans la direction longitudinale X pour optimiser le confort d'utilisation de l'interface d'entrée 14.

L'interface utilisateur 14 peut être adaptée pour commander le siège de véhicule 1 et / ou d'autres parties du véhicule, ainsi que le cas notamment pour permettre :
- le réglage de la position longitudinale et / ou de la hauteur du siège 1,
- le réglage d'inclinaison du dossier 2 ;
- le réglage de la hauteur de l'accoudoir 10 ;
- le réglage de tout autre paramètre dans le véhicule automobile, comme par exemple le réglage audio (autoradio), du GPS, de la position des rétroviseurs extérieurs, du rétroviseur intérieur, de la position du volant par rapport au tableau de bord ;
- la commande d'un système multimédia ;
- des commandes telles que la fermeture centralisée des portières, le déclenchement des feux de détresse,
- ou toute autre commande de véhicule connue de l'homme de l'art.

L'interface d'entrée 14 peut être particulièrement adaptée pour les véhicules autonomes.

## Revendications

1. Accoudoir (10) pour un siège de véhicule (1), comprenant :
- un bras d'accoudoir (12) comportant une surface d'appui supérieure (12A) formant un support pour l'avant-bras d'un occupant du siège de véhicule (1), et
- une interface utilisateur (14) ayant au moins une partie d'affichage (14A) comportant une face avant comprenant un écran (16) et une face arrière,
l'interface utilisateur (14) étant montée mobile sur le bras d'accoudoir (12) entre une position escamotée dans laquelle l'écran (16) est inaccessible et une position déployée dans laquelle l'écran (16) est accessible,
dans lequel la face arrière de la partie d'affichage (14A) forme une coque (18) et dans la position escamotée de l'interface utilisateur (14), la coque (18) est intégrée à la surface d'appui supérieure (12A) du bras d'accoudoir (12) et forme une zone de support pour au moins une partie de l'avant-bras de l'occupant du siège de véhicule,
et dans la position déployée de l'interface utilisateur (14), l'écran (16) est au moins partiellement en saillie au-dessus de la surface d'appui supérieure (12A) du bras d'accoudoir (12),
et dans lequel l'interface utilisateur (14) est montée pivotante autour d'un axe de rotation (Y) et comporte en outre une partie de commande (14B) solidaire de la partie d'affichage (14A), la partie de commande (14B) ayant une face avant (14B1) et une face arrière (14B2), la face avant (14B1) comportant une interface d'entrée (17) et étant disposée pour être inaccessible dans la position escamotée de l'interface utilisateur (14), le bras d'accoudoir (12) comportant une ouverture traversante (12C) qui accueille la partie d'écran (14A) en position escamotée et la partie de commande (14B) en position déployée.

2. Accoudoir (10) selon la revendication 1, dans lequel l'interface utilisateur (14) forme au moins partiellement une extrémité libre (10A) de l'accoudoir (10).

3. Accoudoir (10) selon la revendication 1 ou la revendication 2, dans lequel l'interface utilisateur (14) est mobile en rotation par rapport au bras d'accoudoir (12).

4. Accoudoir (10) selon l'une quelconque des revendications précédentes, dans lequel l'interface utilisateur (14) est montée sur un support (20) qui est lui-même monté mobile en translation par rapport au bras d'accoudoir (12), selon une direction longitudinale (X) du bras d'accoudoir (12).

5. Accoudoir (10) selon la revendication 4, dans lequel ledit support (20) est disposé à une extrémité libre (10A) de l'accoudoir et comporte deux bras de support (21) s'étendant selon la direction longitudinale (X) du bras de support et disposés de part et d'autre de l'interface utilisateur (14).

6. Accoudoir (10) selon l'une quelconque des revendications précédentes , dans lequel l'axe de rotation (Y) est disposé à la jonction entre la partie d'écran (14A) et la partie de commande (14B).

7. Accoudoir (10) selon l'une quelconque des revendications précédentes , dans lequel la face avant (14A1) de la partie d'écran fait avec la face avant (14B1) de la partie de commande un angle (β) compris entre 95 et 140 degrés.

8. Accoudoir (10) selon la revendication 7, dans lequel l'interface utilisateur (14) est positionnable dans une position intermédiaire indexée où l'écran (16) est visible d'un occupant du siège de véhicule mais où la partie de commande (14B) est disposée en biais dans l'ouverture traversante (12C) du bras d'accoudoir.

9. Accoudoir (10) selon la revendication 7 ou la revendication 8, dans lequel l'interface utilisateur (14) est positionnable dans une position entrouverte indexée où l'écran (16) n'est pas visible d'un occupant du siège de véhicule et où la partie de commande (14B) est disposée en biais dans l'ouverture traversante (12C) du bras d'accoudoir.

10. Accoudoir (10) selon l'une quelconque des revendications précédentes, dans lequel l'interface d'entrée (17) est une surface tactile.

11. Accoudoir (10) selon l'une quelconque des revendications précédentes, dans lequel la face arrière (14A2) de la partie d'écran (14A) est alignée avec la face d'appui supérieure (12A) du bras d'accoudoir lorsque l'interface utilisateur est en position escamotée.

12. Accoudoir (10) selon l'une quelconque des revendications précédentes, dans lequel la coque (18) est solidaire de l'écran (16).

13. Siège de véhicule (1) comprenant une assise (3), un dossier (2), et un accoudoir (10) selon l'une quelconque des revendications précédentes.

14. Siège de véhicule (1) selon la revendication 13, dans lequel le bras d'accoudoir (12) est écarté du dossier (2) d'une distance (D) d'au moins 10 cm selon une direction longitudinale (X) du bras d'accoudoir (12).

## Patentansprüche

1. Armlehne (10) für einen Fahrzeugsitz (1), umfassend:
- einen Armlehnenarm (12) mit einer oberen Auflagefläche (12A), die eine Stütze für den Unterarm eines Insassen des Fahrzeugsitzes (1) bildet, und
- eine Benutzerschnittstelle (14) mit wenigstens einem Anzeigeteil (14A), der eine Vorderseite mit einem Bildschirm (16) und eine Rückseite aufweist,
wobei die Benutzerschnittstelle (14) an dem Armlehnenarm (12) zwischen einer eingeklappten Position, in der der Bildschirm (16) unzugänglich ist, und einer ausgeklappten Position, in der der Bildschirm (16) zugänglich ist, beweglich angebracht ist,
wobei die Rückseite des Anzeigeteils (14A) eine Schale (18) bildet, und in der eingeklappten Position der Benutzerschnittstelle (14), die Schale (18) in die obere Auflagefläche (12A) des Armlehnenarms (12) integriert ist und einen Stützbereich für wenigstens einen Teil des Unterarms des Insassen des Fahrzeugsitzes bildet, und in der ausgeklappten Position der Benutzerschnittstelle (14) der Bildschirm (16) wenigstens teilweise über die obere Auflagefläche (12A) des Armlehnenarms (12) hinausragt,
und wobei die Benutzerschnittstelle (14) um eine Drehachse (Y) schwenkbar montiert ist und ferner einen Steuerteil (14B) aufweist, der mit dem Anzeigeteil (14A) fest verbunden ist, wobei der Steuerteil (14B) eine Vorderseite (14B1) und eine Rückseite (14B2) aufweist, wobei die Vorderseite (14B1) eine Eingabeschnittstelle (17) aufweist und so angeordnet ist, dass sie in der eingeklappten Position der Benutzerschnittstelle (14) unzugänglich ist, wobei der Armlehnenarm (12) eine Durchgangsöffnung (12C) aufweist, die den Anzeigeteil (14A) in der eingeklappten Position und den Steuerteil (14B) in der ausgeklappten Position aufnimmt.

2. Armlehne (10) nach Anspruch 1, wobei die Benutzerschnittstelle (14) wenigstens teilweise ein freies Ende (10A) der Armlehne (10) bildet.

3. Armlehne (10) nach Anspruch 1 oder 2, wobei die Benutzerschnittstelle (14) in Bezug auf den Armlehnenarm (12) drehend beweglich ist.

4. Armlehne (10) nach einem der vorhergehenden Ansprüche, wobei die Benutzerschnittstelle (14) an einem Träger (20) angebracht ist, der seinerseits in Bezug auf den Armlehnenarm (12) in einer Längsrichtung (X) des Armlehnenarms (12) translationsbeweglich angebracht ist.

5. Armlehne (10) nach Anspruch 4, wobei der Träger (20) an einem freien Ende (10A) der Armlehne angeordnet ist und zwei Tragarme (21) umfasst, die sich entlang der Längsrichtung (X) des Tragarms erstrecken und auf beiden Seiten der Benutzerschnittstelle (14) angeordnet sind.

6. Armlehne (10) nach einem der vorhergehenden Ansprüche, wobei die Drehachse (Y) an der Verbindung zwischen dem Bildschirmteil (14A) und dem Steuerteil (14B) angeordnet ist.

7. Armlehne (10) nach einem der vorhergehenden Ansprüche, wobei die Vorderseite (14A1) des Bildschirmteils mit der Vorderseite (14B1) des Steuerteils einen Winkel (β) zwischen 95 und 140 Grad bildet.

8. Armlehne (10) nach Anspruch 7, wobei die Benutzerschnittstelle (14) in einer indexierten Zwischenposition positionierbar ist, in der der Bildschirm (16) für einen Insassen des Fahrzeugsitzes sichtbar ist, der Steuerteil (14B) jedoch schräg in der Durchgangsöffnung (12C) des Armlehnenarms angeordnet ist.

9. Armlehne (10) nach Anspruch 7 oder Anspruch 8, wobei die Benutzerschnittstelle (14) in einer halb geöffneten, indexierten Position positionierbar ist, in der der Bildschirm (16) für einen Insassen des Fahrzeugsitzes nicht sichtbar ist, und wobei der Steuerteil (14B) schräg in der Durchgangsöffnung (12C) des Armlehnenarms angeordnet ist.

10. Armlehne (10) nach einem der vorhergehenden Ansprüche, wobei die Eingabeschnittstelle (17) eine berührungssensitive Oberfläche ist.

11. Armlehne (10) nach einem der vorhergehenden Ansprüche, wobei die Rückseite (14A2) des Bildschirmabschnitts (14A) mit der oberen Auflagefläche (12A) des Armlehnenarms ausgerichtet ist, wenn sich die Benutzerschnittstelle in der eingeklappten Position befindet.

12. Armlehne (10) nach einem der vorhergehenden Ansprüche, wobei die Schale (18) fest mit dem Bildschirm (16) verbunden ist.

13. Fahrzeugsitz (1) mit einer Sitzfläche (3), einer Rückenlehne (2) und einer Armlehne (10) nach einem der vorhergehenden Ansprüche.

14. Fahrzeugsitz (1) nach Anspruch 13, wobei der Armlehnenarm (12) in einer Längsrichtung (X) des Armlehnenarms (12) um einen Abstand (D) von wenigstens 10 cm zu der Rückenlehne (2) beabstandet ist.

## Claims

1. Armrest (10) for a vehicle seat (1), comprising:
- an armrest arm (12) having an upper support surface (12A) forming a support for the forearm of an occupant of the vehicle seat (1), and
- a user interface (14) having at least one display portion (14A), having a front face comprising a screen (16) and a rear face,
the user interface (14) being mounted on the armrest arm (12) so as to be movable between a retracted position where the screen (16) is inaccessible and an extended position where the screen (16) is accessible,
wherein the rear face of the display portion (14A) forms a shell (18) and in the retracted position, the shell (18) is integrated with the upper support surface (12A) of the armrest arm (12) and forms a support region for at least part of the forearm of the occupant of the vehicle seat,
and in the extended position of the user interface (14), the screen (16) is at least partially projecting above the upper support surface (12A) of the armrest arm (12),
and wherein the user interface (14) is mounted to be pivotable about an axis of rotation (Y) and further comprises a control portion (14B) integral with the display portion (14A), the control portion (14B) having a front face (14B1) and a rear face (14B2), the front face (14B1) having an input interface (17) and being arranged to be inaccessible when the user interface (14) is in the retracted position, the armrest arm (12) having a through-opening (12C) which accommodates the control portion (14B) in the extended position.

2. Armrest (10) according to claim 1, wherein the user interface (14) at least partially forms a free end (10A) of the armrest (10).

3. Armrest (10) according to claim 1 or claim 2, wherein the user interface (14) is rotatable relative to the armrest arm (12).

4. Armrest (10) according to any one of the preceding claims, wherein the user interface (14) is mounted on a support (20) which is itself mounted to be movable in translation relative to the armrest arm (12), in a longitudinal direction (X) of the armrest arm (12).

5. Armrest (10) according to claim 4, wherein said support (20) is arranged at a free end (10A) of the armrest and comprises two support arms (21) extending in the longitudinal direction (X) of the support arm and arranged one on either side of the user interface (14).

6. Armrest (10) according to any of the preceding claims, wherein the axis of rotation (Y) is arranged at the junction between the screen portion (14A) and the control portion (14B).

7. Armrest (10) according to any of the preceding claims, wherein the front face (14A1) of the screen portion forms an angle (β) of between 95 and 140 degrees with the front face (14B1) of the control portion.

8. Armrest (10) according to claim 7, wherein the user interface (14) can be positioned in an indexed intermediate position where the screen (16) is visible to an occupant of the vehicle seat but where the control portion (14B) is arranged obliquely in the through-opening (12C) of the armrest arm.

9. Armrest (10) according to claim 7 or claim 8, wherein the user interface (14) can be positioned in an indexed partially-open position where the screen (16) is not visible to an occupant of the vehicle seat and where the control portion (14B) is arranged obliquely in the through-opening (12C) of the armrest arm.

10. Armrest (10) according to any of the preceding claims, wherein the input interface (17) is a touch surface.

11. Armrest (10) according to any one of the preceding claims, wherein the rear face (14A2) of the screen portion (14A) is aligned with the upper support face (12A) of the armrest arm when the user interface is in the retracted position.

12. Armrest (10) according to any one of the preceding claims, wherein the shell (18) is integral with the screen (16).

13. Vehicle seat (1) comprising a seating portion (3), a backrest (2), and an armrest (10) according to any one of the preceding claims.

14. Vehicle seat (1) according to claim 14, wherein the armrest arm (12) is distanced from the backrest (2) by a distance (D) of at least 10 cm in the longitudinal direction (X) of the armrest arm (12).
